# EUROPEAN PATENT SPECIFICATION

(11) **EP 1 849 389 B1**
(45) Date of publication and mention of the grant of the patent: **25.08.2010**
(21) Application number: 06705652.3
(22) Date of filing: 17.02.2006
(51) Int. Cl.: A47J 37/08, H05B 3/64

(54) **TOASTER**
TOASTER
GRILLE-PAIN

(30) Priority: 19.02.2005 CN 200520054963 U
(43) Date of publication of application: 31.10.2007
(73) Proprietor: Wang, Donglei, Xiangzhou District, Zhuhai, Guangdong 519085 (CN)
(72) Inventor: Wang, Donglei, Xiangzhou District, Zhuhai, Guangdong 519085 (CN)
(74) Representative: Notaro, Giancarlo
(86) International application number: PCT/CN2006/000231
(87) International publication number: WO 2006/086926

(56) References cited:
- EP-A1- 1 369 073
- DE-A1- 19 535 299
- DE-U1- 9 300 070
- US-A- 5 400 697
- US-A1- 2004 222 215
- US-B1- 6 730 888

## Description

### Technical Field

The present invention relates to a high power electric toaster having at least two toasting chambers, **and in particular to an electric toaster with tubular heating elements with heat reflectors eliminating the need for heat shields.**

### Background of the Invention

At present, electric toasters, which are being sold in domestic and foreign markets, are mainly used for toasting pieces of food, such as bread, bagel and muffin, etc., and include a sheet heating element formed mainly by a mica sheet coiled by electric heating wires. In use, cooked pieces of food are put vertically into toasting chambers, and the sheet heating element is disposed parallel to the cooked pieces of food. Because thermal radiation is sent from the entire sheet heating element to the toasted food, even toasting is more easily achieved. However, the disadvantage of using a sheet-heating element is that, the power is confined to the coiled electric conductor, whereby the sheet heating element is slow to heat up, and high power toasting is difficult to achieve. Another implementation is to replace the sheet-heating element by a tubular heating element or use both of them together. But the available electric toasters, which adopt tubular heating elements as heating elements, have only one toasting chamber to toast food. The reasons lie in that, for electric toasters having at least two toasting chambers, if purely tubular heating elements are adopted, it is difficult to arrange the middle heating tube so as to get the food evenly toasted; while if both tubular and sheet heating elements are adopted, the structure of that electric toaster will be complicated and the toasting speed will remain slow. United States Patent No. 5,400,697 issued March 28, 1995 to Dax et al discloses a two toasting chamber electric toaster with four tubular heating elements. **In the Dax et al toaster**, in order to toast evenly, shielding bars were placed outside the heating tube towards the side of bread to avoid uneven toasting. Unfortunately, the arrangement of shielding bars inevitably results in low toasting efficiency and more toasting time. Therefore, fast toasting with high power can not be achieved with prior art electric toasters.

**A toaster according to the preamble of claim 1 is known from** DE 93 00 070 U1**.**

### Summary of the Invention

The invention is aimed at providing a kind of high power electric toaster with at least two bread toasting chambers, and to toast food evenly and fast without the use of shields.

The goal of the present invention is achieved by the features of claim 1.

The present invention has following advantages: the electric toaster has more heating tubes conforming to the shape of reflectors so as to toast food without shielding. Moreover, by the use of high efficiency heating elements, such as quartz heating tube or halogen heating tube etc, the electric toaster can toast bread slice faster and more safely. The power of the electric toaster can be increased to 1400W, and food can be deeply toasted in a minute, which makes the toasting time three times faster than conventional electric toaster having mica heating elements coiled by electric heating wires.

### Brief Description of the Drawings

FIG. 1 is a cross-sectional view of the electric toaster according to one embodiment of the present invention.
FIG. 2 is a cross-sectional view of a side reflector of the electric toaster as shown in FIG. 1.

### Detailed Description of the Preferred Embodiment

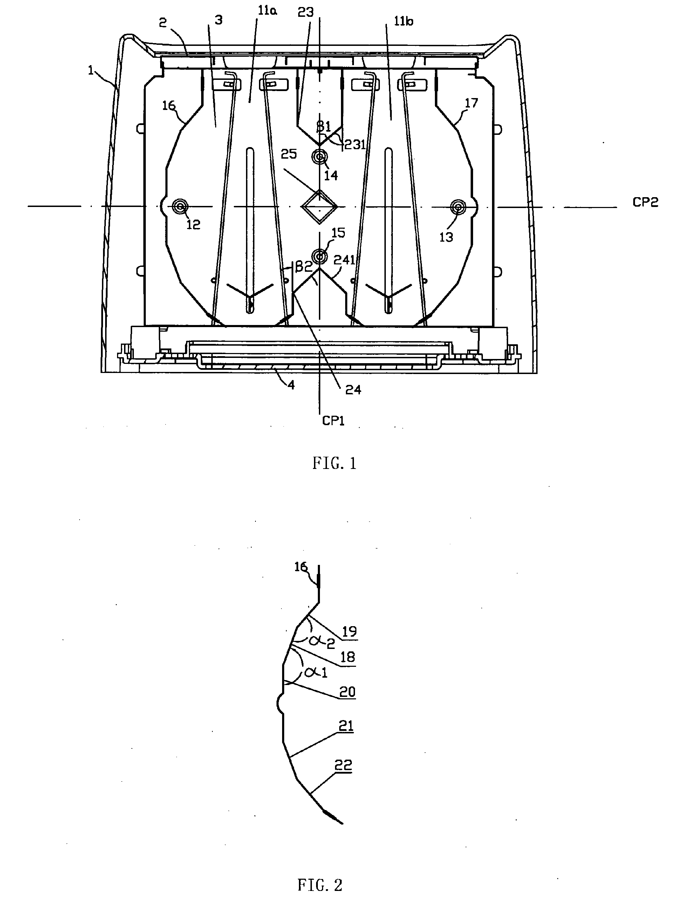

The electric toaster according to the present invention comprises at least two bread-toasting chambers and at least four tubular heating elements. As illustrated in Figures 1 and 2, the electric toaster with two bread toasting chambers and four tubular heating elements has high power for fast toasting, without requiring the prior art shielding bars, so as to achieve no-shielding toasting with increased heating efficiency and less toasting time.

The electric toaster according to the present invention comprises an outer housing 1 with openings in the top, a top cover 2, a control device disposed on the outer housing 1, a toasting region 3 and a bottom 4. The toasting region 3, enclosed inside the outer housing 1, comprises two toasting chambers **11a and 11b** for toasting pieces, e.g. slices of food. Each toasting chambers **11a and 11b** has an opening in the top, which conforms to the openings in the top of the outer housing 1. Tubular heating elements 12 to 15 are disposed respectively on both sides of the toasting chambers **11a** and **11b ,** which are all tubular heating elements. The toasting region 3 is surrounded by a front plate, a back plate (not shown), a right reflector 17 and a left reflector 16, which are joined together. The toasting region 3 is fixed on the bottom 4. A vertical plane, which is parallel to the surface of the food slice and which is in between of the toasting chambers **11a** and **11b ,** is defined as the first central plane **CP1.** Upper and lower tubular heating elements 14 and 15 are disposed between the toasting chambers **11a and 11b** . The central lines of the upper and lower tubular heating elements 14 and 15 are both within a toasting area of the first central plane **CP1 .** A horizontal plane in between of the upper and lower tubular heating elements 14 and 15 is defined as the second central plane **CP2 .** The left tubular heating element 12 is set on the left side of the left toasting chamber **11a ,** while the right tubular heating element 13 is set on the right side of the right toasting chamber **11b .** The central longitudinal lines of the left and right tubular heating elements 14 and 15 are within the second central plane **CP2. Preferably, there are four tubular heating elements 12 to 14 in total, but more are possible**. Each tubular heating element is positioned at equal distance from the central line of an adjacent toasting chamber. A left reflector 16 is disposed on the left side of the left **tubular heating element 12**, while a right reflector 17 is disposed on the right side of the right **tubular heating element 13**. The left reflector 16 and the right reflector 17 are symmetrical **with respect to the first central plane CP1**, and both are drum-shaped **or inwardly concave**. The left and right reflectors 16 and 17 are both formed by several pieces of flat or bent sheets with different obliquity, i.e. at obtuse angles to each other **and to the first central plane CP1**. The shapes of the reflectors 16, 17 and 23 to 25 are suitable for reflecting part of the thermal radiation from the tubular heating elements 12 to 15 toward the surfaces of the slices of food. The left and right reflectors 16 and 17 facing the tubular heating elements 12 and 13, respectively, each contains a first reflective planar surface 18 and a second reflective planar surface 19 joined or formed next to each other, which are located above the second central plane **CP2 ,** and contains a third reflective planar surface 21 and a fourth reflective planar surface 22 also joined or formed next to each other, which are located under the second central plane **CP2** . The first reflective planar surface 18 is disposed at an obtuse angle α1 to the vertical planar surface 20 of 150° to 165°, and the second reflective planar surface 19 is disposed at the angle α2 to the first reflective planar surface 18 of 150° to 165°,. The third reflective planar surface 21 is symmetrical with the first reflective planar surface 18, the fourth reflective planar surface 22 is symmetrical with the second reflective planar surface 19 with respect to the second central plane **CP2 .** The toasting chambers **11a** and **11b ,** the tubular heating elements 12 to 15, and the left and right reflectors 16 and 17 are all fixed at their ends respectively on the front sheet and the back sheet.

The electric toaster also comprises other necessary parts not shown, such as a lift mechanism, a switch means, a wiring board assemble, etc, which can be applied in many ways as the conventional electric toaster.

The tubular heating elements 12 to 15 can be quartz heating tubes, stainless steel heating tubes or halogen heating tubes. The tubular heating elements 12 to 15 are fixed at the front and back plates of the toasting region by use of ceramic insulating sleeves; and the tubular heating elements 12, 13 and 15 are respectively positioned below the middle of the **left and right** toasting chambers **11a** and **11b** to compensate for rising heat.

An upper reflector 23 is disposed above the upper tubular heating element 14, and a lower reflector 24 is disposed below the lower tubular heating element 15. The shapes of the upper and lower reflectors 23 and 24 are suitable for reflecting part of the thermal radiation from the upper and lower tubular heating elements 14 and 15 towards the surfaces of the slices of food in opposite directions in **both the left and right toasting chamber 11a and 11b.** The upper reflector 23 and the lower reflector 24 can be formed by multiple surfaces at obtuse angles joined together, wherein the multiple surfaces at obtuse angles are symmetrical with respect to the first central plane **CP1** and are designed with proper reflection angles according to desires. As illustrated in Figure 2, the upper reflector 23 has a first reflective planar surface 231; the first reflective planar surface 231 and a vertical plane forms an angle β1 of 30° to 60°, while the lower reflector 24 has a second reflective planar surface 241; the lower reflective planar surface 241 and a vertical plane forms an angle β2 of 30° to 60° .

A middle reflector 25 is set between upper and lower tubular heating elements 14 and 15. The middle reflector 25 is of a diamond columnar shape symmetrical with respect to the first central plane **CP1 .**

The reflectors 16, 17 and 23 to 25 are made from a material with high surface reflection efficiency, such as mirror stainless steel plate or aluminum plate, etc. so as to achieve desirable toasting result.

By increasing the number of heating tubes which are disposed between the two toasting chambers, the electric toaster of the present invention can achieve a sufficient total power, ensuring safety and a long lifetime. Moreover, the increased quantity of heating tubes leads to a more even application of radiation directly from the tubular heating elements onto the surfaces of the slices of food being toasted, thereby enabling the toasting of food without excess shielding.

As the heat from the tubular heating elements 12 to 15 is relatively concentrated and the toasting surface of bread is relatively large, the heat from the tubular heating elements 12 to 15 is unevenly spread onto the surfaces of the bread. The part of the bread which is nearest to the tubular heating elements 12 to 15 gets more reflected heat than the parts which are farther away. The reflectors 16, 17 and 23 to 25 are used to reflect most of the un-reflected heat back onto the surfaces of the slices of food. The above-mentioned shapes of the reflectors 16, 17 and 23 to 25 are to compensate for the uneven heat spread over the bread slice so as to get bread toasted evenly. Only when the reflected heat by the reflectors16, 17 and 23 to 25 is not enough to compensate for the uneven heat spreading by direct radiation, are shielding bars used for even toasting.

For a 1400W power electric toaster with two toasting chambers and four tubular heating elements, it is preferred to choose upper and lower tubular heating elements of 315W power, and left and right tubular heating elements of 385W power to achieve desirable toasting.

## Claims

1. An electric toaster comprising:
an outer housing **(1)** with openings in the top;
a top cover **(2);**
a control device disposed on the outer housing;
a toasting region **(3)** enclosed inside the outer housing **(1)** comprising **left and right** toasting chambers **(11a,11b)** for toasting slices of food, each toasting chamber having an opening, which conforms to one of the openings in the top of the outer housing **(1),** the toasting region **(3)** is surrounded by a front plate, a back plate, a right and a left reflector **(17,16),** which are joined together;
**upper, lower, left and right** tubular heating elements **(12-15)** respectively disposed on both sides of the **left and right** toasting chambers **(11a,11b);** and a bottom **(4)** with the toasting region fixed thereto;
wherein a vertical plane which is parallel to a surface of the slices of food and which is in between the **left and right** toasting chambers **(11a,11b)** is defined as a first central plane **(CP1);**
wherein the upper and lower tubular heating elements **(14,15)** are disposed between the **left and right** toasting chambers **(11a,11b),** and central lines of the upper and lower tubular heating elements **(14,15)** are both within a toasting area of the first central plane **(CP1**);
wherein a horizontal plane approximately between the upper and lower tubular heating elements **(14,15)** is defined as the second central plane **(CP2);**
wherein the left tubular heating element **(12)** is disposed on a left side of the left toasting chamber **(11a),** while the right tubular heating element **(13)** is disposed on a right side of the right toasting chamber **(11b);**
wherein central lines of said left and right tubular heating elements **(12,13)** are within said second central plane **(CP2);**
wherein each tubular heating element **(12-15)** is positioned at an approximately equal distance from the central line of an adjacent toasting chamber **(11a,11b);**
wherein a left reflector **(16)** is disposed on the left side of the left **tubular heating element (12),** while a right reflector **(17)** is disposed on the right side of the right **tubular heating element (13);** the left reflector **(16)** and the right reflector **(17)** are symmetrical and **inwardly concave;**
wherein each of the left and right reflectors **(16,17)** is defined by a plurality of surfaces **(18-22)** at obtuse angles to each other; the shape of the left or right reflector **(16,179** is suitable for reflecting part of the thermal radiation from the left or right tubular heating elements **(12,13)** toward the surfaces of the slices of food;
**characterized in that** each of said left and right reflectors **(16,17)** contains a first reflective surface **(18)** and a second reflective surface **(19)** adjacent to each other which are located above the second central plane **(CP2),** and contains a third reflective surface **(21)** and a fourth reflective surface **(22)** also adjacent to each other which are located under the second central plane **(CP2);**
**in that** the first reflective surface **(18)** is disposed to the vertical plane at an angle α1 of 150° to 165°, and the second reflective surface **(19)** is disposed to the first reflective surface **(18)** at an angle α2 of 150° to 165°;
**in that** the third reflective surface **(21)** is symmetrical with the first reflective surface**(18)** , and the fourth reflective surface **(22)** is symmetrical with the second reflective surface **(19)** with respect to the second central plane **(CP2), and**
**in that** the toasting chambers (11a,11b), the tubular heating elements (12-15), and the left and right reflectors (16,17) are all fixed at their ends respectively on the front plate and the back plate.

2. The electric toaster according to claim **1**, wherein said **left and right** tubular heating elements **(12,13)** are selected from the group consisting of quartz heating tubes, stainless steel heating tubes and halogen heating tubes.

3. The electric toaster according to claim **2,** wherein said **upper, lower, left and right** tubular heating elements **(12-15)** are fixed at the front and back plates of the toasting region **(3)** by use of ceramic insulating sleeves; and wherein the **left and right** tubular heating elements **(12,13)** are positioned below the middle of the **left and right** toasting chambers **(11a,11b) to compensate for rising heat.**

4. The electric toaster according to claim **3,** further comprising:
an upper reflector **(23)** disposed above the upper tubular heating element **(14),** and
a lower reflector **(24)** disposed below the lower tubular heating element **(15);** wherein said upper and lower reflectors **(24,25)** are shaped for reflecting part of the thermal radiation from the upper and lower tubular heating elements **(14,15)** towards the surfaces of the slices of food in **both the left and right** toasting chambers **(11a,11b).**

5. The electric toaster according to claim **4**, wherein the upper reflector **(23)** and the lower reflector **(24)** are formed by multiple surfaces at obtuse angles to each other, wherein said multiple surfaces are symmetrical with respect to the first central plane **(CP1**).

6. The electric toaster according to claim **5**, wherein said upper reflector **(23)** has a first reflective planar surface **(231);** the first reflective planar surface **(231)** and a vertical plane forms an angle β1 of 30° to 60°, while the lower reflector **(24)** has a second reflective planar surface **(241);** the second planar reflective surface **(241)** and the vertical plane forms an angle β2 of 30° to 60°.

7. The electric toaster according to claim **4**, further comprising a middle reflector **(25)** set between upper and lower tubular heating elements **(14,15),** the middle reflector **(25)** having a diamond columnar shape symmetrical with respect to the first central plane **(CP1).**

8. The electric toaster according to claim **7,** wherein said **middle reflector (25) is** made from a material with high surface reflection efficiency selected from the group consisting of mirror stainless steel plate and aluminum plate.

9. The electric toaster according to claim 4, wherein said upper and lower reflectors (23,24) are made from a material with high surface reflection efficiency selected from the group consisting of mirror stainless steel plate and aluminum plate.

10. The electric toaster according to claim 1, wherein said left and right reflectors (16,17) are made from a material with high surface reflection efficiency selected from the group consisting of mirror stainless steel plate and aluminum plate.

11. The electric toaster according to claim 10, wherein said upper and lower tubular heating elements (14,15) are selected from the group consisting of quartz heating tubes, stainless steel heating tubes and halogen heating tubes.

12. The electric toaster according to claim 11, wherein said upper, lower, left and right tubular heating elements (12-15) are fixed at the front and back plates of the toasting region (3) by use of ceramic insulating sleeves; and wherein the left and right tubular heating elements (12,13)are positioned below the middle of the left and right toasting chambers (11a,11b) to compensate for rising heat.

13. The electric toaster according to claim 1, further comprising:
an upper reflector (23) disposed above the upper tubular heating element (14), and
a lower reflector (24) disposed below the lower tubular heating element (15);
wherein said upper and lower reflectors (23,24) are shaped for reflecting part of the thermal radiation from the upper and lower tubular heating elements (14,15) towards the surfaces of the slices of food in both the left and right toasting chambers (11a,11b).

14. The electric toaster according to claim 13, wherein the upper reflector (23) and the lower reflector (24) are formed by multiple surfaces at obtuse angles to each other, wherein said multiple surfaces are symmetrical with respect to the first central plane (CP1).

15. The electric toaster according to claim 14 , wherein said upper reflector (23) has a first reflective planar surface (231); the first reflective planar surface (231) and a vertical plane forms an angle β1 of 30° to 60°, while the lower reflector (24) has a second reflective planar surface (241); the second planar reflective surface (241) and the vertical plane forms an angle β2 of 30° to 60°.

16. The electric toaster according to claim 13, further comprising a middle reflector (25) set between upper and lower tubular heating elements (14,15), the middle reflector (25) having a diamond columnar shape symmetrical with respect to the first central plane (CP1).

17. The electric toaster according to claim 16, wherein said middle reflector (25) is made from a material with high surface reflection efficiency selected from the group consisting of mirror stainless steel plate and aluminum plate.

## Patentansprüche

1. Elektrischer Toaster, enthaltend:
ein Außengehäuse (1) mit Öffnungen in der Oberseite;
eine obere Abdeckung (2);
eine Steuervorrichtung, die an dem Außengehäuse angebracht ist;
einen Toastbereich (3), der von dem Außengehäuse (1) umschlossen ist und eine rechte sowie eine linke Toastkammer (11 a, 11 b) zum Toasten von Scheiben eines Nahrungsmittels enthält, wobei jede Toastkammer eine Öffnung hat, die einer der Öffnungen in der Oberseite des Außengehäuses (1) entspricht, der Toastbereich (3) von einer Frontplatte, einer hinteren Platte, sowie einem rechten und einem linken Reflektor (17, 16) umgeben ist, die miteinander verbunden sind, und obere, untere, linke und rechte röhrenförmige Heizelemente (12-15) jeweils auf beiden Seiten der linken und der rechten Toastkammer (11 a, 11 b) angeordnet sind; und
einen Boden (4), an dem der Toastbereich befestigt ist;
wobei eine vertikale Ebene, die parallel zu einer Oberfläche der Nahrungsmittelscheiben ist und die sich zwischen der linken und der rechten Toastkammer (11 a, 11 b) befindet, als eine erste zentrale Ebene (CP1) definiert ist;
das obere und das untere röhrenförmige Heizelement (14, 15) zwischen der linken und der rechten Toastkammer (11 a, 11 b) angeordnet sind und sich zentrale Linien des oberen und des unteren röhrenförmigen Heizelementes (14, 15) beide innerhalb eines Toastbereiches der ersten zentralen Ebene (CP1) befinden;
eine horizontale Ebene etwa zwischen dem oberen und dem unteren röhrenförmigen Heizelement (14, 15) als die zweite zentrale Ebene (CP2) definiert ist;
das linke röhrenförmige Heizelement (12) auf einer linken Seite der linken Toastkammer (11a) angeordnet ist, während das rechte röhrenförmige Heizelement (13) auf einer rechten Seite der rechten Toastkammer (11 b) angeordnet ist;
sich zentrale Linien des linken und des rechten röhrenförmigen Heizelementes (12, 13) innerhalb der zweiten zentralen Ebene (CP2) befinden;
jedes röhrenförmige Heizelement (12-15) etwa in demselben Abstand von der zentralen Linie einer benachbarten Toastkammer (11 a, 11 b) angeordnet ist;
ein linker Reflektor (16) auf der linken Seite des linken röhrenförmigen Heizelementes (12) angeordnet ist, während ein rechter Reflektor (17) auf der rechten Seite des rechten röhrenförmigen Heizelementes (13) angeordnet ist und der linke Reflektor (16) sowie der rechte Reflektor (17) symmetrisch und nach innen konkav sind; und
der linke sowie der rechte Reflektor (16, 17) jeweils durch eine Vielzahl von Oberflächen (18-22) in stumpfen Winkeln zueinander definiert ist und sich der linke oder der rechte Reflektor (16, 17) dazu eignen, einen Teil der Wärmestrahlung von dem linken oder dem rechten röhrenförmigen Heizelement (12, 13) zu den Oberflächen der Nahrungsmittelscheiben zu reflektieren;
**dadurch gekennzeichnet, dass** der linke und der rechte Reflektor (16, 17) jeweils eine erste Reflexionsfläche (18) und eine zweite Reflexionsfläche (19) enthält, die einander benachbart sind und über der zweiten zentralen Ebene (CP2) angeordnet sind, und eine dritte Reflexionsfläche (21) sowie eine vierte Reflexionsfläche (22) enthält, die ebenfalls einander benachbart sind und sich unter der zweiten zentralen Ebene (CP2) befinden;
**dadurch**, dass die erste Reflexionsfläche (18) zur vertikalen Ebene in einem Winkel α1 von 150° bis 165° angeordnet ist und die zweite Reflexionsfläche (19) zur ersten Reflexionsfläche (18) in einem Winkel α2 von 150° bis 165° angeordnet ist;
**dadurch**, dass die dritte Reflexionsfläche (21) zur ersten Reflexionsfläche (18) symmetrisch ist und die vierte Reflexionsfläche (22) zur zweiten Reflexionsfläche (19) im Bezug auf die zweite zentrale Ebene (CP2) symmetrisch ist;
und **dadurch**, dass die Toastkammern (11 a, 11 b), die röhrenförmigen Heizelemente (12-15) und der linke sowie der rechte Reflektor (16, 17) allesamt jeweils an ihren Enden an der Frontplatte und der hinteren Platte befestigt sind.

2. Elektrischer Toaster nach Anspruch 1, bei dem das linke und das rechte röhrenförmige Heizelement (12, 13) aus der Gruppe gewählt sind, die aus Quartz-Heizröhren, Edelstahl-Heizröhren und Halogen-Heizröhren besteht.

3. Elektrischer Toaster nach Anspruch 2, bei dem das obere, das untere, das linke und das rechte röhrenförmige Heizelement (12-15) an der Frontplatte und der hinteren Platte das Toastbereiches (3) mit Hilfe von keramischen Isolierhülsen befestigt sind, wobei das linke und das rechte röhrenförmige Heizelement (12, 13) unter der Mitte der linken und der rechten Toastkammer (11 a, 11 b) angeordnet sind, um einen Wärmeanstieg zu kompensieren.

4. Elektrischer Toaster nach Anspruch 3, weiterhin enthaltend:
einen oberen Reflektor (22), der über dem oberen röhrenförmigen Heizelement (14) angeordnet ist, und
einen unteren Reflektor (24), der unter dem unteren röhrenförmigen Heizelement (15) angeordnet ist;
wobei der obere und der untere Reflektor (24, 25) derart geformt sind, dass sie einen Teil der Wärmestrahlung von dem oberen und dem unteren röhrenförmigen Heizelement (14, 15) zu den Oberflächen der Nahrungsmittelscheiben sowohl in der linken als auch der rechten Toastkammer (11 a, 11 b) reflektieren.

5. Elektrischer Toaster nach Anspruch 4, bei dem der obere Reflektor (23) und der untere Reflektor (24) durch mehrere Oberflächen ausgebildet sind, die in einem stumpfen Winkel zueinander angeordnet sind, wobei diese zahlreichen Oberflächen im Bezug auf die erste zentrale Ebene (CP1) symmetrisch sind.

6. Elektrischer Toaster nach Anspruch 5, bei dem der obere Reflektor (23) eine erste plane Reflexionsfläche (231) hat und die erste plane Reflexionsfläche (231) sowie eine vertikale Ebene einen Winkel β1 von 30° bis 60° bilden, während der untere Reflektor (24) eine zweite plane Reflexionsfläche (241) hat und die zweite plane Reflexionsfläche (241) sowie die vertikale Ebene einen Winkel β2 von 30° bis 60° bilden.

7. Elektrischer Toaster nach Anspruch 4, weiterhin enthaltend einen mittleren Reflektor (25), der zwischen dem oberen und dem unteren röhrenförmigen Heizelement (14, 15) angeordnet ist, wobei der mittlere Reflektor (25) eine diamantartige, säulenförmige Gestalt im Bezug auf die erste zentrale Ebene (CP1) hat.

8. Elektrischer Toaster nach Anspruch 7, bei dem der mittlere Reflektor (25) aus einem Material mit einer hohen Oberflächenreflexionswirkung besteht, das aus der Gruppe gewählt ist, die aus einer spiegelnden Edelstahlplatte und einer Aluminiumplatte besteht.

9. Elektrischer Toaster nach Anspruch 4, bei dem der obere und der untere Reflektor (23, 24) aus einem Material mit einer hohen Oberflächenreflexionswirkung bestehen, das aus der Gruppe gewählt ist, die aus einer spiegelnden Edelstahlplatte und einer Aluminiumplatte besteht.

10. Elektrischer Toaster nach Anspruch 1, bei dem der linke und der rechte Reflektor (16, 17) aus einem Material mit einer hohen Oberflächenreflexionswirkung bestehen, das aus der Gruppe gewählt ist, die aus einer spiegelnden Edelstahlplatte und einer Aluminiumplatte besteht.

11. Elektrischer Toaster nach Anspruch 10, bei dem das obere und das untere röhrenförmige Heizelement (14, 15) aus der Gruppe gewählt sind, die aus Quartz-Heizröhren, Edelstahl-Heizröhren und Halogen-Heizröhren besteht.

12. Elektrischer Toaster nach Anspruch 11, bei dem das obere, das untere, das linke und das rechte röhrenförmige Heizelement (12-15) an der Frontplatte und der hinteren Platte des Toastbereiches (3) mit Hilfe keramischer Isolierhülsen befestigt sind, wobei das linke und das rechte Heizelement (12, 13) unter der Mitte der linken und der rechten Toastkammer (11 a, 11 b) angeordnet sind, um einen Wärmeanstieg zu kompensieren.

13. Elektrischer Toaster nach Anspruch 1, weiterhin enthaltend:
einen oberen Reflektor (23), der über dem oberen röhrenförmigen Heizelement (14) angeordnet ist, und
einen unteren Reflektor (24), der unter dem unteren röhrenförmigen Heizelement (15) angeordnet ist;
wobei der obere und der untere Reflektor (23, 24) derart geformt sind, dass sie einen Teil der Wärmestrahlung von dem oberen und dem unteren Heizelement (14, 15) zu den Oberflächen der Nahrungsmittelscheiben in der linken und der rechten Toastkammer (11 a, 11 b) reflektieren.

14. Elektrischer Toaster nach Anspruch 13, bei dem der obere Reflektor (23) und der untere Reflektor (24) durch mehrere Oberflächen ausgebildet sind, die in einem stumpfen Winkel zueinander angeordnet sind, wobei diese zahlreichen Oberflächen im Bezug auf die erste zentrale Ebene (CP1) symmetrisch sind.

15. Elektrischer Toaster nach Anspruch 14, bei dem der obere Reflektor (23) eine erste plane Reflexionsfläche (231) hat und die erste plane Reflexionsfläche (231) sowie eine vertikale Ebene einen Winkel β1 von 30° bis 60° bilden, während der untere Reflektor (24) eine zweite plane Reflexionsfläche (241) hat und die zweite plane Reflexionsfläche (241) sowie die vertikale Ebene einen Winkel β2 von 30° bis 60° bilden.

16. Elektrischer Toaster nach Anspruch 13, weiterhin enthaltend einen mittleren Reflektor (25), der zwischen dem oberen und dem unteren röhrenförmigen Heizelement (14, 15) angeordnet ist, wobei der mittlere Reflektor (25) eine diamantartige, säulenförmige Gestalt hat, die im Bezug auf die erste zentrale Ebene (CP1) symmetrisch ist.

17. Elektrischer Toaster nach Anspruch 16, bei dem der mittlere Reflektor (25) aus einem Material mit einer hohen Oberflächenreflexionswirkung besteht, das aus der Gruppe gewählt ist, die aus einer spiegelnden Edelstahlplatte und einer Aluminiumplatte besteht.

## Revendications

1. Grille-pain électrique, comprenant :
un boîtier extérieur (1) avec des ouvertures dans la partie supérieure ;
un couvercle supérieur (2) ;
un dispositif de commande disposé sur le boîtier extérieur ;
une région de grillage (3) enfermée à l'intérieur du boîtier extérieur (1) comprenant des chambres de grillage gauche et droite (11 a, 11 b) destinées à griller des tranches d'aliment, chaque chambre de grillage comportant une ouverture, qui se conforme à une des ouvertures dans la partie supérieure du boîtier extérieur (1), la région de grillage (3) est entourée par une plaque avant, une plaque arrière, des réflecteurs droit et gauche (17, 16), qui sont joints l'un à l'autre ;
des éléments chauffants tubulaires supérieur, inférieur, gauche et droit (12 à 15) respectivement disposés sur les deux côtés des chambres de grillage gauche et droite (11a, 11b) ; et
un fond (4) avec la région de grillage fixé à celui-ci ;
dans lequel un plan vertical qui est parallèle à une surface des tranches d'aliment et qui se trouve entre les chambres de grillage gauche et droite (11 a, 11 b) est défini en tant que premier plan central (CP1) ;
dans lequel les éléments chauffants tubulaires supérieur et inférieur (14, 15) sont disposés entre les chambres de grillage gauche et droite (11a, 11b), et des lignes centrales des éléments chauffants tubulaires supérieur et inférieur (14, 15) sont toutes les deux à l'intérieur d'une zone de grillage du premier plan central (CP1) ;
dans lequel un plan horizontal approximativement entre les éléments chauffants tubulaires supérieur et inférieur (14, 15) est défini en tant que second plan central (CP2) ;
dans lequel l'élément chauffant tubulaire gauche (12) est disposé sur un côté gauche de la chambre de grillage gauche (11a), alors que l'élément chauffant tubulaire droit (13) est disposé sur un côté droit de la chambre de grillage droite (11b) ;
dans lequel les lignes centrales desdits éléments chauffants tubulaires gauche et droit (12, 13) sont à l'intérieur dudit second plan central (CP2) ;
dans lequel chaque élément chauffant tubulaire (12 à 15) est positionné à une distance approximativement égale de la ligne centrale d'une chambre de grillage adjacente (11 a, 11 b) ;
dans lequel un réflecteur gauche (16) est disposé sur le côté gauche de l'élément chauffant tubulaire gauche (12), alors qu'un réflecteur droit (17) est disposé sur le côté droit de l'élément chauffant tubulaire droit (13) ; le réflecteur gauche (16) et le réflecteur droit (17) sont symétriques et concaves vers l'intérieur ;
dans lequel chacun des réflecteurs gauche et droit (16, 17) est défini par une pluralité de surfaces (18 à 22) à des angles obtus les unes par rapport aux autres ; la forme du réflecteur gauche ou droit (16, 17) est appropriée pour réfléchir une partie du rayonnement thermique à partir de l'élément chauffant tubulaire gauche ou droit (12, 13) vers les surfaces des tranches d'aliment ;
**caractérisé en ce que** chacun desdits réflecteurs gauche et droits (16, 17) contient une première surface réfléchissante (18) et une deuxième surface réfléchissante (19) adjacentes l'une à l'autre qui sont situées au-dessus du second plan central (CP2), et contient une troisième surface réfléchissante (21) et une quatrième surface réfléchissante (22) également adjacentes l'une à l'autre qui sont situées sous le second plan central (CP2) ;
**en ce que** la première surface réfléchissante (18) est disposée par rapport au plan vertical à un angle α1 de 150° à 165°, et la deuxième surface réfléchissante (19) est disposée par rapport à la première surface réfléchissante (18) à un angle α2 de 150° à 165° ;
**en ce que** la troisième surface réfléchissante (21) est symétrique avec la première surface réfléchissante(18), et la quatrième surface réfléchissante (22) est symétrique avec la deuxième surface réfléchissante (19) par rapport au second plan central (CP2), et
**en ce que** les chambres de grillage (11 a, 11 b), les éléments chauffants tubulaires (12 à 15), et les réflecteurs gauche et droit (16, 17) sont tous fixés à leurs extrémités respectivement sur la plaque avant et la plaque arrière.

2. Grille-pain électrique selon la revendication 1, dans lequel lesdits éléments chauffants tubulaires gauche et droit (12, 13) sont sélectionnés parmi le groupe constitué de tubes chauffants en quartz, de tubes chauffants en acier inoxydable et de tubes chauffants halogènes.

3. Grille-pain électrique selon la revendication 2, dans lequel lesdits éléments chauffants tubulaires supérieur, inférieur, gauche et droit (12 à 15) sont fixés sur les plaques avant et arrière de la région de grillage (3) grâce à l'utilisation de manchons isolants en céramique ; et dans lequel les éléments chauffants tubulaires gauche et droit (12, 13) sont positionnés en dessous du milieu des chambres de grillage gauche et droite (11 a, 11 b) pour compenser la chaleur montante.

4. Grille-pain électrique selon la revendication 3, comprenant en outre :
un réflecteur supérieur (23) disposé au-dessus de l'élément chauffant tubulaire supérieur (14), et
un réflecteur inférieur (24) disposé en dessous de l'élément chauffant tubulaire inférieur (15) ;
dans lequel lesdits réflecteurs supérieur et inférieur (24, 25) sont mis en forme pour réfléchir une partie du rayonnement thermique à partir des éléments chauffants tubulaires supérieur et inférieur (14, 15) vers les surfaces des tranches d'aliment dans les deux chambres de grillage gauche et droite (11 a, 11 b).

5. Grille-pain électrique selon la revendication 4, dans lequel le réflecteur supérieur (23) et le réflecteur inférieur (24) sont formés par de multiples surfaces formant des angles obtus les unes avec les autres, dans lequel lesdites multiples surfaces sont symétriques par rapport au premier plan central (CP1).

6. Grille-pain électrique selon la revendication 5, dans lequel ledit réflecteur supérieur (23) comporte une première surface plane réfléchissante (231); la première surface plane réfléchissante (231) et un plan vertical forment un angle β1 de 30° à 60°, alors que le réflecteur inférieur (24) comporte une seconde surface plane réfléchissante (241) ; la seconde surface plane réfléchissante (241) et le plan vertical forment un angle β2 de 30° à 60°.

7. Grille-pain électrique selon la revendication 4, comprenant en outre un réflecteur médian (25) placé entre les éléments chauffants tubulaires supérieur et inférieur (14, 15), le réflecteur médian (25) présentant une forme en colonne en losange symétrique par rapport au premier plan central (CP1).

8. Grille-pain électrique selon la revendication 7, dans lequel ledit réflecteur médian (25) est fait d'un matériau avec un haut rendement de réflexion à la surface sélectionné parmi le groupe constitué de plaque-miroir en acier inoxydable et de plaque-miroir en aluminium.

9. Grille-pain électrique selon la revendication 4, dans lequel lesdits réflecteurs supérieur et inférieur (23, 24) sont faits d'un matériau avec un haut rendement de réflexion à la surface sélectionné parmi le groupe constitué de plaque-miroir en acier inoxydable et de plaque-miroir en aluminium.

10. Grille-pain électrique selon la revendication 1, dans lequel lesdits réflecteurs gauche et droits (16, 17) sont faits d'un matériau avec un haut rendement de réflexion à la surface sélectionné parmi le groupe constitué de plaque-miroir en acier inoxydable et de plaque-miroir en aluminium.

11. Grille-pain électrique selon la revendication 10, dans lequel lesdits éléments chauffants tubulaires supérieur et inférieur (14, 15) sont sélectionnés parmi le groupe constitué de tubes chauffants en quartz, de tubes chauffants en acier inoxydable et de tubes chauffants halogènes.

12. Grille-pain électrique selon la revendication 11, dans lequel lesdits éléments chauffants tubulaires supérieur, inférieur, gauche et droit (12 à 15) sont fixés sur les plaques avant et arrière de la région de grillage (3) grâce à l'utilisation de manchons isolants en céramique ; et dans lequel les éléments chauffants tubulaires gauche et droit (12, 13) sont positionnés en dessous du milieu des chambres de grillage gauche et droite (11 a, 11 b) pour compenser la chaleur montante.

13. Grille-pain électrique selon la revendication 1, comprenant en outre :
un réflecteur supérieur (23) disposé au-dessus de l'élément chauffant tubulaire supérieur (14), et
un réflecteur inférieur (24) disposé en dessous de l'élément chauffant tubulaire inférieur (15) ;
dans lequel lesdits réflecteurs supérieur et inférieur (23, 24) sont formés pour réfléchir une partie du rayonnement thermique à partir des éléments chauffants tubulaires supérieur et inférieur (14, 15) vers les surfaces des tranches d'aliment dans les deux chambres de grillage gauche et droite (11 a, 11 b).

14. Grille-pain électrique selon la revendication 13, dans lequel le réflecteur supérieur (23) et le réflecteur inférieur (24) sont formés par de multiples surfaces formant des angles obtus les unes avec les autres, dans lequel lesdites multiples surfaces sont symétriques par rapport au premier plan central (CP1).

15. Grille-pain électrique selon la revendication 14, dans lequel ledit réflecteur supérieur (23) comporte une première surface plane réfléchissante (231); la première surface plane réfléchissante (231) et un plan vertical forment un angle β1 de 30° à 60°, alors que le réflecteur inférieur (24) comporte une seconde surface plane réfléchissante (241) ; la seconde surface plane réfléchissante (241) et le plan vertical forment un angle β2 de 30° à 60°.

16. Grille-pain électrique selon la revendication 13, comprenant en outre un réflecteur médian (25) placé entre les éléments chauffants tubulaires supérieur et inférieur (14, 15), le réflecteur médian (25) présentant une forme en colonne en losange symétrique par rapport au premier plan central (CP1).

17. Grille-pain électrique selon la revendication 16, dans lequel ledit réflecteur médian (25) est fait d'un matériau avec un haut rendement de réflexion à la surface sélectionné parmi le groupe constitué de plaque-miroir en acier inoxydable et de plaque-miroir en aluminium.
